Europäisches Patentamt

European Patent Office

Office européen des brevets

(19)

(11) Veröffentlichungsnummer : **0 173 900**
**B1**

(12) **EUROPÄISCHE PATENTSCHRIFT**

(45) Veröffentlichungstag der Patentschrift :
24.01.90

(21) Anmeldenummer : 85110255.8

(22) Anmeldetag : 16.08.85

(51) Int. Cl.⁵ : **G 11 B 20/18, H 04 N  5/782**

(54) Fehlerschützender Code für digitale Videomagnetbandgeräte.

(30) Priorität : 04.09.84 DE 3432421

(43) Veröffentlichungstag der Anmeldung :
12.03.86 Patentblatt 86/11

(45) Bekanntmachung des Hinweises auf die Patenter-
teilung : 24.01.90 Patentblatt 90/04

(84) Benannte Vertragsstaaten :
DE GB

(56) Entgegenhaltungen :
EP--A-- 0 061 288
EP--A-- 0 098 082
DE--A-- 3 045 000
IBM I. Research Develop. Jan 1980, S. 32-42
Fernseh - Kinotechnik 3/1984, S. 85-94
Die Akte enthält technische Angaben, die nach dem
Eingang der Anmeldung eingereicht wurden und die
nicht in dieser Patentschrift enthalten sind.

(73) Patentinhaber : ROBERT BOSCH GMBH
Postfach 10 60 50
D-7000 Stuttgart 10 (DE)

(72) Erfinder : Heitmann, Jürgen, Dipl.-Ing.
Ernst-Pasque-Strasse 36
D-6146 Alsbach-Hähnlein 1 (DE)

EP 0 173 900 B1

**Beschreibung**

Die Erfindung geht aus von einem Verfahren zur fehlerschützenden Codierung eines Videosignals nach dem Oberbegriff des Patentanspruchs 1.

Herkömmliche Codes zur Verbesserung der Übertragungsqualität digital codierter Videosignale durch Korrektur oder Überdeckung der im Übertragungsweg auftretenden Fehler erkennen und verarbeiten die Daten eines zu übertragenden Fernsehbildes in Zeilenrichtung (sogenannte horizontale Codes) und/oder in Spaltenrichtung (sogenannte vertikale Codes).

Aus der DE-A-3 045000 ist ein Digital-Videobandgerät zum Aufzeichnen eines ankommenden digitalen Videosignals auf Magnetband bekannt, welches eine Einrichtung zum Aufteilen des digitalen Videosignals in mehrere Datenkanäle mit Blocksynchron-Codes und zyklischer Blockprüf-Codes zur Fehlererfassung und/oder -korrektur enthält. Dabei ist das Signal eines einzigen Datenkanals zunächst in einer Blockmatrix abgelegt, die aus 21 Blöcken in Spaltenrichtung und 12 Blöcken in Zeilenrichtung besteht. In Zeilen- und Spaltenrichtung der Blockmatrix schließen sich Paritätsdaten an. Jeder Block der Matrix ist in zwei Unterblöcke unterteilt. In einem Unterblock befinden sich die Videodaten einer achtel Bildzeile, die mit einem Synchron- und Identifiziersignal sowie mit einem CRC-Code zur Kennzeichnung versehen sind. Nachteilig bei diesem bekannten Code ist die große Redundanz durch dreimalige Anwendung eines fehlerkorrigierenden Codes. Außerdem lassen sich bei dieser bekannten Code-Strukturierung die abgeleiteten Prüfworte in Spaltenrichtung nicht gleichmäßig verteilen, um ein effektive Datenverwürflung (Shuffling) zu erzielen.

Weiterhin ist aus der Zeitschrift « IBM J. Research Develop. », Jan. 1980, Seiten 32 bis 42, bekannt, eine Fehlererkennung und -korrektur für Daten vorzusehen. In einer Matrix werden in Zeilenrichtung 16 Datencodeworte und in Spaltenrichtung 13 Datencodeworte angeordnet, denen in Zeilenrichtung ein gerades Paritätswort zugesetzt wird. In Spaltenrichtung werden zwei Prüfabschnitte an die Daten angefügt. Nachteilig bei dieser Codierungsform ist auch hier die große Redundanz. Derart große Redundanzen werden üblicherweise in Datenverarbeitungsanlagen gefordert, um die Fehlerrate klein zu halten. Für Videoanwendungen mit der Möglichkeit, Videodaten in einem Suchlaufbetrieb als Fernsehbilder darzustellen, ist dieses Codierungsprinzip nicht geeignet.

Weiterhin ist aus der Zeitschrift « Fernseh- und Kino-Technik », 3/1984, Seiten 85 bis 94, bekannt, eine Fehlererkennung in einem Datenblock durch Hinzufügen von Prüfzeilen und Prüfspalten durchzuführen.

Aufgabe der vorliegenden Erfindung ist es, ein Verfahren zur fehlerschützenden Codierung eines digitalen Videosignals gemäß der eingangs genannten Art anzugeben, welches auf die im wiedergegebenen Datensignal enthaltenen Fehler durch Aussetzer (drop-out) unempfindlicher reagiert.

Diese Aufgabe wird durch die im kennzeichnenden Teil des Patentanspruchs 1 angegebenen Merkmale gelöst.

Das erfindungsgemäße Verfahren weist den Vorteil auf, daß bei seiner Anwendung die Blockbildung der Prüfinformationen aufgebrochen werden kann, sß daß für einen größeren Teil der Videodaten eine Fehlerkorrektur möglich wird.

Durch die in den Unteransprüchen aufgeführten Maßnahmen sind vorteilhafte Weiterbildungen und Verbesserungen des im Hauptanspruch angegebenen Verfahrens möglich.

Weitere Vorteile und Einzelheiten der Erfindung werden nachfolgend in einer Zeichnung anhand von Figuren dargestellt und näher bescrhrieben. Es zeigen :

Fig. 1 schematisch die Anordnung der fehlerschützenden Maßnahmen im Verhältnis der vorliegenden Datenmenge,

Fig. 2 ein Zahlenbeispiel der fehlerschützenden Maßnahmen entsprechend Fig. 1.

Beschreibung

Die anfallende Datenmenge bei der Übertragung eines digital codierten Videosignals wird entsprechend der Erfindung sowohl in horizontaler Richtung (Zeilenrichtung) als auch senkrecht zur Zeilenrichtung (Vertikalrichtung) codiert. Der zur Verwendung gelangende Code für die Codierung in Zeilenrichtung wird daher als horizontaler Code $C_h$ und der Code für die Codierung in vertikaler Richtung als vertikaler Code $C_v$ bezeichnet. In horizontaler Richtung wird der fehlerschützende Code $C_h$ noch durch die Aufnahme von Synchronworten $R_s$ und Blockadressen $R_a$ ergänzt. Für den Fehlerschutz $R_h$, $R_v$, Synchronisierzeichen $R_s$ und Blockadressen $R_a$ stehen dabei etwa 22 % der Datenrate zur Verfügung. Die gesamte aufzuzeichnende Datenrate beträgt 227 Mbit/sec × 158 mm/170 mm = 210,9765 Mbit/sec = $D_b$.

Die Nettobilddatenrate $D_n$ beträgt dabei $D_n$ = Halbbilder/sec × Spuren per Halbbild × Zeilen per Spur × bytes per Zeile × bits per bytes = 50 × 12 × 50 × 720 × 8 = 172,8 Mbit/sec.

Die verfügbare Redundanz ist daher :

$$(D_b - D_n)/D_n = 22,09 \%.$$

2

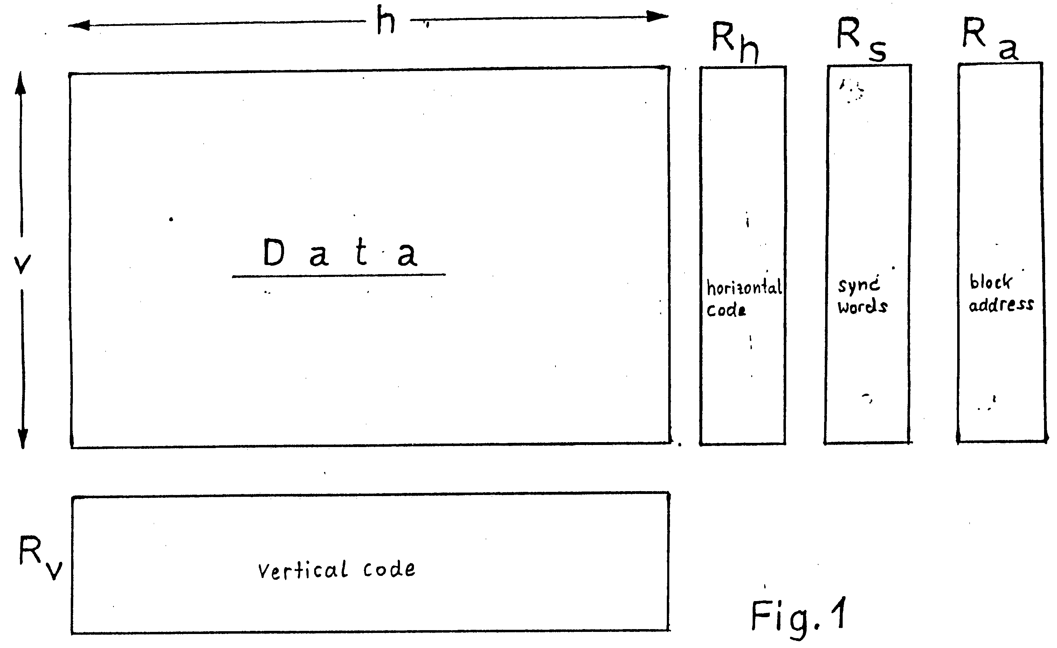

Bei einem Produktcode gemäß Fig. 1 werden die Daten in einem Feld der Größe h × v angeordnet, das zeilenweise aufgezeichnet wird. Die Länge dieser Zeilen muß nicht mit der Länge der Bildzeilen übereinstimmen. Zur Unterscheidung gegenüber den Bildzeilen sind sie im folgenden mit Datenzeilen bezeichnet. Auch die Länge der « Datenspalten » ist nur in einem Sonderfall mit der Anzahl der Zeilen pro Spur identisch. Das Feld h × v soll maximal alle Daten einer Schrägspur enthalten.

Es gilt dann :

$$h \times v = \text{bytes pro Zeile} \times \text{Zeilen pro Spur} = 720 \times 50 = 36000 \text{ byte} = 2 \times 2 \times 2 \times 2 \times 2 \times 5 \times 5 \times 5 \times 3 \times 3 \text{ byte.}$$

Für die zugesetzte Redundanz gilt :

$$(R_v + R_h + R_s + R_a)/(h \times v) = 0{,}2209$$

Horizontaler und vertikaler Code müssen nicht identisch sein. So ist es z. B. möglich, für die Codierung in horizontaler Richtung einen Hamming-Code zu verwenden, während in vertikaler Richtung ein Reed-Solomon-Code Verwendung finden kann.

Im Suchlauf arbeitet nur der horizontale Code. Für eine optimale Bildqualität im Suchlauf muß der horizontale Code eine sichere Fehlerdetektionsfähigkeit aufweisen. Eine Überlastung des Codes soll zu einem nur minimalen Verlust an Daten führen. Dabei kann auf eine Fehlerkorrektur verzichtet werden, da im Suchlauf normalerweise keine aufeinanderfolgenden Generationen bei der magnetischen Speicherung digital codierter Videosignale hergestellt werden. Hierfür erscheinen Fehlerverdeckungsmaßnahmen ausreichend.

In enger zeitlicher Folge gehäuft auftretende Fehler, sogenannte Burstfehler, welche im Suchlauf durch das Überqueren der Spuren hervorgerufen werden, werden durch einen Verteilprozeß auf eine höhere Zahl von Schutzabschnitten aufgeteilt. Im allgemeinen wird dies jede Korrekturmöglichkeit übersteigen. Die Erkennungsschaltung für verbliebene Fehler kennzeichnet alle jene fehlerhaften Blocks, auf welche die Burstfehler verteilt wurden. Zur Erzielung minimaler Datenverluste darf ein Fehlererkennungscode nicht mit einer Verteiltechnik kombiniert werden. Eine fehlererkennender Code sollte nur bei den vier meist signifikanten Bits verwendet werden, da sonst die Verzerrungen aus der Fehlerüberdeckung störender sein können als die Ursprungsfehler.

Die Prüfworte des vertikalen Codes dürfen nicht nacheinander aufgezeichnet werden, da ein einziger Aussetzfehler oder ein Kratzer auf dem Magnetband einen erheblichen Anteil der Prüfinformation zerstören kann. Deshalb müssen die Prüfworte des vertikalen Codes gleichmäßig in der Datenmenge h × v verteilt sein. Vorteilhaft ist daher das Verhältnis h/v einer ganzen Zahl.

Ein Kratzer auf dem Magnetband oder ein Aussetzfehler von Bildzeilenlänge soll fast vollständig korrigierbar sein. Dies wird durch große effektive Verteiltiefe des vertikalen Codes $C_v$ gewährleistet. Voraussetzung ist dabei, daß der vertikale Code $C_v$ die volle Korrektur- und Erkennungsfähigkeit aufweist.

Die notwendige Anzahl von Synchronzeichen wird durch die höchste Suchgeschwindigkeit bestimmt. Der größte Anstand zwischen aufeinanderfolgenden Synchronworten sollte nicht größer sein als etwa 180 bytes.

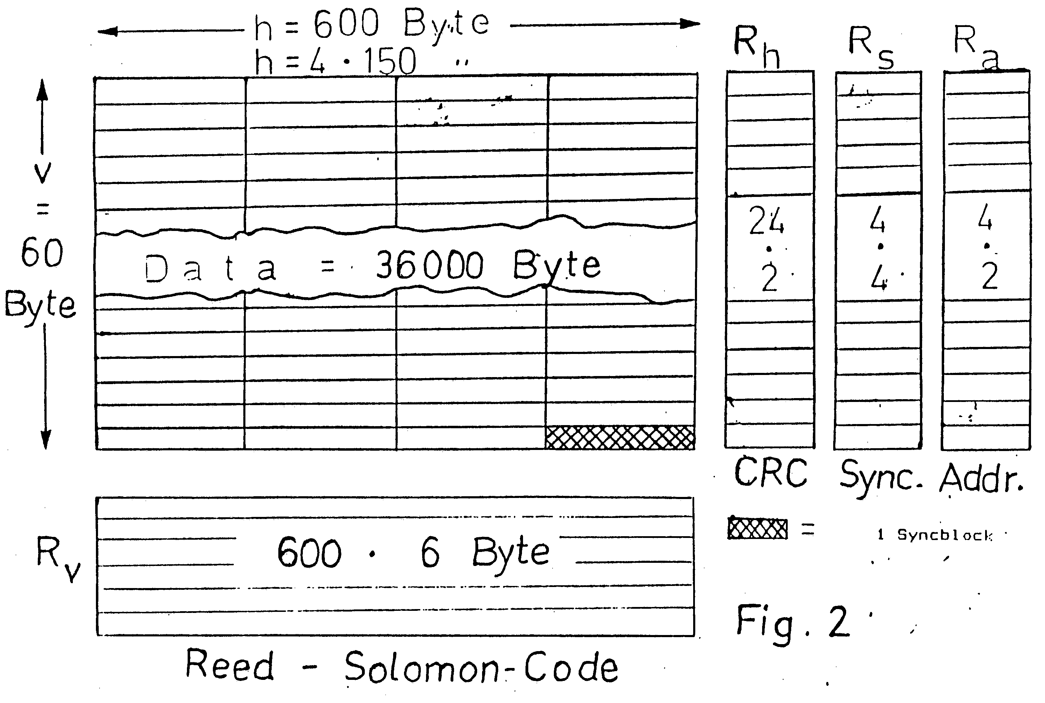

Die Abmessungen der Datenmatrix gemäß einem vorteilhaften Ausführungsbeispiel nach Fig. 2 betragen : in Vertikalrichtung v = 60 bytes in Horizontalrichtung h = 600 bytes.

Das Feld h × v soll maximal nicht mehr als die Daten einer Spur auf einem Magnetband enthalten, das nach den Grundsätzen der Schrägspurtechnik beschrieben ist.

**Patentansprüche**

1. Verfahren zur fehlerschützenden Codierung eines digitalen Videosignals, bei welchem von Datenworten des digitalen Videosignals durch Anwendung fehlerkorrigierender Codes in Zeilenrichtung eines Datenfeldes (Data) erste Prüfworte (Rn) und in Spaltenrichtung eines Datenfeldes zweite Prüfworte (Rv) abgeleitet werden, welche den Daten des Videosignals zugesetzt und mit Synchronworten (Rs) und Blockadressen (Ra) auf Spuren eines Magnetbandes seriell aufgezeichnet werden, dadurch gekennzeichnet, daß das Verhältnis der Anzahl (h) der Datenworte in Zeilenrichtung zu der Anzahl (v) der Datenworte in Spaltenrichtung im Datenfeld eine ganze Zahl ist, so daß bei der zeilenweisen Aufzeichnung die ersten und zweiten Prüfworte in der Menge der Datenworte des Datenfeldes gleichmäßig verteilt werden.

2. Verfahren nach Anspruch 1 zur Magnetbandaufzeichnung, dadurch gekennzeichnet, daß die Anzahl (v) der Datenworte eines codierten Zyklus in Spaltenrichtung von der Anzahl der Bildzeilen pro Spur auf dem Magnetband verschieden ist.

3. Verfahren nach Anspruch 1, dadurch gekennzeichnet, daß zur Codierung in Zeilenrichtung ein fehlererkennender Code vorgesehen ist, der nur bei den vier meist signifikanten Bits wirksam ist.

4. Verfahren nach Anspruch 1, dadurch gekennzeichnet, daß der Abstand zwischen aufeinanderfolgenden Synchronworten gleich oder kleiner etwa 180 Bytes der Daten ist.

## Claims

1. Method for the error-detecting encoding of a digital video signal, in which from the data words of the digital video signal are derived first check words ($R_n$) by applying error-correcting codes in the row direction of a data field (data) and second check words ($R_v$) in the column direction of a data field, are added to the video signal data and serially recorded with sync words ($R_s$) and block addresses ($R_a$) on tracks of a magnetic tape, characterized in that the ratio of the number (h) of data words in the row direction to the number (v) of data words in the column direction in the data field is an integer, so that in the case of row-by-row recording, the first and second check words are uniformly distributed in the quantity of the data field words.

2. Method according to claim 1 for magnetic tape recording, characterized in that the number (v) of data words of an encoded cycle in the column direction differs from the number of image lines per track on the magnetic tape.

3. Method according to claim 1, characterized in that an error-detecting code effective only with the four most significant bits is provided for encoding in the row direction.

4. Method according to claim 1, characterized in that the spacing between successive sync words is equal to or smaller than approximately 180 data bytes.

## Revendications

1. Procédé pour le codage de protection contre les erreurs d'un signal vidéo numérique, selon lequel on dérive des mots de données du signal vidéo numérique par application d'un code corrigé des erreurs, des premiers mots de contrôle (Rn) dans la direction des lignes d'un premier champ de données (Data) et des seconds mots de contrôle (Rv) dans la direction des colonnes d'un champ de données, mots qui sont ajoutés aux données du signal vidéo et sont inscrits avec des mots de synchronisation (Rs) et des adresses de blocs (Ra) sur les pistes d'une bande magnétique, en série, procédé caractérisé en ce que le rapport du nombre (h) de mots de données dans la direction des lignes et du nombre (v) de mots de données dans la direction des colonnes du champ de données est un nombre entier, si bien que, lors de l'inscription ligne par ligne, les premiers et les seconds mots de contrôle sont répartis régulièrement dans l'ensemble des mots de données du champ de données.

2. Procédé selon la revendication 1 pour l'enregistrement sur bande magnétique, caractérisé en ce que le nombre (v) des mots de données d'un cycle codé dans la direction des colonnes est différent du nombre de lignes d'images par piste de la bande magnétique.

3. Procédé selon la revendication 1, caractérisé en ce que pour coder il est prévu, dans la direction des lignes, un code de reconnaissance d'erreurs qui n'agit que pour les quatre bits les plus significatifs.

4. Procédé selon la revendication 1, caractérisé en ce que la distance entre deux mots synchrones successifs est égale ou inférieure à environ 180 octets de données.

$R_a$

block address

$R_s$

sync words

$R_h$

horizontal code

$h$

Data

$v$

vertical code

$R_v$

Fig.1

1

$$h = 600 \text{ Byte}$$
$$h = 4 \cdot 150 \quad ''$$

$$60 \text{ Byte} = 60 \text{ Byte}$$

Data = 36000 Byte

$R_h$  $R_s$  $R_a$

| $\frac{24}{\cdot}$ | $\frac{4}{\cdot}$ | $\frac{4}{\cdot}$ |
| 2 | 4 | 2 |

CRC  Sync.  Addr.

▨ = 1 Syncblock

$R_v$  600 · 6 Byte

Reed - Solomon-Code

Fig. 2

EP 0 173 900 B1